# EUROPEAN PATENT SPECIFICATION

(11) **EP 1 893 691 B1**
(45) Date of publication and mention of the grant of the patent: **07.10.2009**
(21) Application number: 06770067.4
(22) Date of filing: 08.05.2006
(51) Int. Cl.: C08L 69/00

(54) **MINERAL FILLED POLYESTER POLYCARBONATE COMPOSITION**
MIT EINEM MINERAL GEFÜLLTE POLYESTER-POLYCARBONAT-ZUSAMMENSETZUNG
COMPOSITION DE POLYESTER ET POLYCARBONATE A CHARGE MINERALE

(30) Priority: 26.05.2005 US 138550
(43) Date of publication of application: 05.03.2008
(73) Proprietor: SABIC Innovative Plastics IP B.V., 4612 PX Bergen op Zoom (NL)
(72) Inventor: VAN GISBERGEN, Josephus Gerardus, M., NL-4617 MK Bergen Op Zoom (NL); ONDA, Kayoko, Utsunomiya, Tochigi, 321-3223 (JP); KONO, Mari, Koto, Tokyo, 135-0061 (JP); LI, Mingfeng, Shanghai 200032 (CN)
(74) Representative: Müller, Frank Peter
(86) International application number: PCT/US2006/017615
(87) International publication number: WO 2006/127246

(56) References cited:
- WO-A-91/05823

## Description

### BACKGROUND OF THE INVENTION

Plastics have been replacing metals and other natural products in industry for many years. This is particularly true in the automotive parts area. The lighter weight of plastics and their flexibility in structural design provide significant motivation to designers and engineers to use plastics. However the easier replacements have been made, for example instrument panels, bumpers, fascia and the like. Further part replacement is continuously being considered, but these parts, particularly the larger exterior parts have chemical, mechanical, and appearance requirements, and the like, which are very stringent and difficult to meet. Considering the large size and potentially structurally intricate nature of the part, a relatively high flow material is needed.

To ensure a precise assembly fitting of a large panel as well as maintaining part dimensions for any size product within significant temperature variations, a low coefficient of thermal expansion (hereafter referred to as CTE) is required. Generally a high heat distortion temperature (hereafter known as HDT) is also necessary for the painting of exterior parts, which is generally performed at 100-120°C. Since it is a replacement for a metal, properties such as flexural modulus, impact resistance (ductility and break) and the like must be maintained to meet performance requirements. Aesthetic appearances are also very important for an exterior part. It should have a smooth surface free or essentially free of visual defects such as weld line, delamination, streak and in the case of paints, particularly urethane based surface paints and the like - blistering. As an outdoor application, good resistance to environmental exposure such as common chemicals is also important. Additionally maintenance of good adhesion between the plastic surface and a paint is also significant.

Not only is the list of required characteristics for this plastic material lengthy but many of these characteristics are at cross-purposes to each other. To be high in one can mean that another one is low. Therefore a series of balanced properties is necessary to obtain. Although applicable to an exterior automotive body panel, this balance of properties is applicable to other applications such as, e.g. business machine housings, power tool and engine covers as well. This material can be used for any application, even those not requiring superior aesthetics.

After lengthy experimentation a complex plastic blend has been discovered which can meet these requirements. It is an impact modified polycarbonate polyester blend also containing a filler.

### SUMMARY OF THE INVENTION

In accordance with the invention, there is a composition comprising
a. about 50 to about 80 wt.% aromatic polycarbonate,
b. about 15 to about 35 wt.% aromatic polyester,
c. about 5 to about 15 wt.% filler, and
d. about 3 to about 10 wt.% of a combination of a rubbery copolymer and a block copolymer with at least about 0.25 wt.% rubbery copolymer and at least about 0.25 wt.% block copolymer.

### DETAILED DESCRIPTION OF THE INVENTION

Polycarbonate resins are generally aromatic resins. Typically these are prepared by reacting a dihydric phenol with a carbonate precursor. The dihydric phenol which may be employed to provide such aromatic carbonate polymers are mononuclear or polynuclear aromatic compounds, containing as functional groups two hydroxy radicals, each of which is attached directly to a carbon atom of an aromatic nucleus. Typical dihydric phenols are: 2,2-bis(4-hydroxyphenyl) propane; hydroquinone; resorcinol; 2,2-bis(4-hydroxyphenyl) pentane; 2,4'-(dihydroxydiphenyl) methane; bis(2-hydroxyphenyl) methane; bis(4-hydroxyphenyl) methane; 1,1-bis(4-hydroxyphenyl)-3,3,5-trimethylcyclohexane; fluorenone bisphenol, 1,1-bis(4-hydroxyphenyl) ethane; 3,3-bis(4-hydroxyphenyl) pentane; 2,2-dihydroxydiphenyl; 2,6-dihydroxynaphthalene; bis(4-hydroxydiphenyl) sulfone; bis(3,5-diethyl-4-hydroxyphenyl) sulfone; 2,2-bis(3,5-dimethyl-4-hydroxyphenyl) propane; 2,4'-dihydroxydiphenyl sulfone; 5'-chloro-2,4'-dihydroxydiphenyl sulfone; bis-(4-hydroxyphenyl) diphenyl sulfone; 4,4'-dihydroxydiphenyl ether; 4,4'-dihydroxy-3,3'-dichlorodiphenyl ether; 4,4'-dihydroxy-2,5-diphenyl ether; and the like.

Other dihydric phenols used in the preparation of the above polycarbonates are disclosed in U.S. Pat Nos. 2,999,835; 3,038,365; 3,334,154; and 4,131,575.

Aromatic polycarbonates can be manufactured by known processes; such as, for example and as mentioned above, by reacting a dihydric phenol with a carbonate precursor, such as phosgene, in accordance with methods set forth in the above-cited literature and in U.S. Pat. No. 4,123,436, or by transesterification processes such as are disclosed in U.S. Pat. No. 3,153,008, as well as other processes known to those skilled in the art.

It is also possible to employ two or more different dihydric phenols or a copolymer of a dihydric phenol with a glycol or with a hydroxy- or acid-terminated polyester or with a dibasic acid in the event a carbonate copolymer or interpolymer rather than a homopolymer is desired for use in the preparation of the polycarbonate mixtures of the invention. Branched polycarbonates are also useful, such as are described in U.S. Pat. No. 4,001,184. Also, there can be utilized blends of linear polycarbonate and a branched polycarbonate. Moreover, blends of any of the above materials may be employed in the practice of this invention to provide the aromatic polycarbonate.

One aromatic polycarbonate is a homopolymer, e.g., a homopolymer derived from 2,2-bis(4-hydroxyphenyl) propane; (bisphenol-A) and phosgene, commercially available under the trade designation LEXAN Registered TM from General Electric Company.

Branched polycarbonates are prepared by adding a branching agent during polymerization. These branching agents are well known and may comprise polyfunctional organic compounds containing at least three functional groups, which may be hydroxyl, carboxyl, carboxylic anhydride, haloformyl and mixtures thereof. Specific examples include trimellitic acid, trimellitic anhydride, trimellitic trichloride, tris-p-hydroxy phenyl ethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid and benzophenone tetracarboxylic acid. The branching agent may be added at a level of about 0.05-2.0 weight percent. Branching agents and procedures for making branched polycarbonates are described in U.S. Letters Pat. Nos. 3,635,895; 4,001,184; and 4,204,047.

Since relatively high melt flow is an important characteristic of the blend, a relatively low to moderate intrinsic viscosity (IV) aromatic polycarbonate is preferred - An IV of from about 42 to about 50 ml/g as measured in methylene chloride at 25°C. A preferred IV is from about 44 to about 48 ml/g, more preferred about 46.5 to 47.5 ml/g.

The quantity of aromatic polycarbonate employed in the composition is from about 50 to about 80 wt.% of the composition, preferably about 55 to about 75 wt.%.

The polyester resin components typically comprise structural units of the following formula: 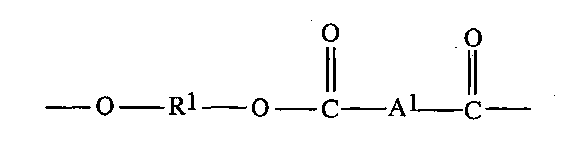 wherein each R¹ is independently a divalent aliphatic, alicyclic or aromatic hydrocarbon or polyoxyalkylene radical, or mixtures thereof and each A¹ is independently a divalent aliphatic, alicyclic or aromatic radical, or mixtures thereof.
The polyester resin components typically comprise thereof and each A¹ is independently a divalent aliphatic, alicyclic or aromatic radical, or mixtures thereof. Examples of suitable polyesters containing the structure of the above formula are poly(alkylene dicarboxylates), liquid crystalline polyesters, and polyester copolymers. It is also possible to use branched polyester in which a branching agent, for example, a glycol having three or more hydroxyl groups or a trifunctional or multifunctional carboxylic acid has been incorporated. Furthermore, it is sometimes desirable to have various concentrations of acid and hydroxyl end groups on the polyester, depending on the ultimate end-use of the composition.

The R¹ radical may be, for example, a C₂₋₁₂ alkylene radical, a C₆₋₁₂ alicyclic radical, a C₆₋₂₀ aromatic radical or a polyoxyalkylene radical in which the alkylene groups contain about 2-6 and most often 2 or 4 carbon atoms. The A¹ radical in the above formula is most often p- or m-phenylene, a cycloaliphatic or a mixture thereof. This class of polyester includes the poly(alkylene terephthalates) and the polyarylates.
Such polyesters are known in the art as illustrated by the following U.S. patents.

| | | |
|---|---|---|
| 2,465,3192,720,502 | 2,727,881 | 2,822,348 |
| 3,047,5393,671,487 | 3,953,394 | 4,128,526 |

Examples of aromatic dicarboxylic acids represented by the dicarboxylated residue A¹ are isophthalic or terephthalic acid, 1,2-di(p-carboxyphenyl) ethane, 4,4'-dicarboxydiphenyl ether, 4,4' bisbenzoic acid and mixtures thereof. Acids containing fused rings can also be present, such as in 1,4- 1,5- 2,7- or 2,6-naphthalenedicarboxylic acids. The preferred dicarboxylic acids are terephthalic acid, isophthalic acid, naphthalene dicarboxylic acid, cyclohexane dicarboxylic acid or mixtures thereof.

Polyesters include poly(ethylene terephthalate) ("PET"), and poly(1,4-butylene terephthalate), ("PBT"), poly(ethylene naphthanoate) ("PEN"), poly(butylene naphthanoate), ("PBN") and poly(trimethylene terephthalate) ("PTT"), and mixtures thereof.

Polyesters also include resins comprised of terephthalic acid, 1,4-cyclohexanedimethanol and ethylene glycol for example PCTG, PETG as well as PCTA and PCT resins which are available from the Eastman Chemical Company.

Polyesters also include PCCD referred to above is poly(1,4-cyclohexylenedimethylene 1,4- cyclohexanedicarboxylate) also sometimes referred to as poly(1,4-cyclohexane-dimethanol-1,4-dicarboxylate) which has recurring units of the formula: 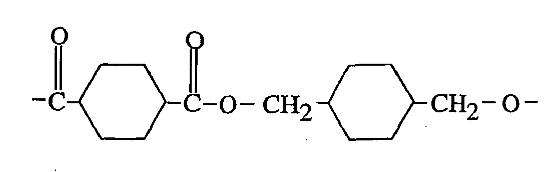 and modifications of PCCD with various diols or polytetrahydrofuran co-monomers.

Polyesters may include minor amounts, e.g., from about 0.5 to about 5 percent by weight, of units derived from various aliphatic acid and/or aliphatic polyols to form copolyesters. The aliphatic polyols include glycols, such as poly(ethylene glycol) or poly(butylene glycol). Such polyesters can be made following the teachings of, for example, U.S. Pat. Nos. 2,465,319 and 3,047,539.

Recycled polyesters and blends of recycled polyesters with virgin polyester can be used.

An aromatic polyester such as a polyethylene terephthalate has an I.V. of about 0.52 to about 0.62 dl/g, preferably about 0.54 to about 0.60 as measured in a 60:40 phenol/tetrachloroethane mixture or similar solvent at 23-30°C. A preferred weight ratio of polycarbonate to polyester is about 65-75 to about 35-25.

The filler, which is employed, can be any filler such as glass fiber, glass bead, talc, mica, clay, wollastonite, and the like. When CTE is obtained by using of filler, preferably ultra fine inorganic mineral filler is employed. Ultra fine size filler is additionally preferred for a good shiny surface. A good balance of properties is obtained using about 5 to about 15 wt.% filler. The filler is preferably a mineral filler such as talc and preferably of fine size such as about 10 microns or smaller. Glass type fillers of such a size can be employed as well.

It has been found to obtain the proper mix of characteristics such as flow, impact, and non-delamination, a combination of certain elastomeric impact modifying resins should be used. One is a rubbery copolymer and the second is a block copolymer.

The rubbery copolymer generally comprises an acrylic or methacrylic grafted polymer with a conjugated diene or an acrylate elastomer, alone, or copolymerized with a vinyl aromatic compound. Particularly useful are the core-shell polymers of the type available from Rohm & Haas, for example, those sold under the trade designation Paraloid®. In general these impact modifiers contain units derived from butadiene or isoprene, alone or in combination with a vinyl aromatic compound, or butyl acrylate, alone or in combination with a vinyl aromatic compound. The aforementioned impact modifiers are believed to be disclosed in Fromuth et al., U.S. Pat. No. 4,180,494 ; Owens, U.S. Pat. No. 3,808,180; Farnham et al., U.S. Pat. No. 4,096,202 ; and Cohen et al., U.S. Pat. No. 4,260,693. Most preferably, the impact modifier will comprise a two-stage polymer having either a butadiene or butyl acrylate based rubbery core and a second stage polymerized from methylmethacrylate alone, or in combination with styrene. Also present in the first stage are crosslinking and/or graftlinking monomers. Examples of the crosslinking monomers include 1,3-butylene diacrylate, divinyl benzene and butylene dimethacrylate. Examples of graftlinking monomers are allyl acrylate, allyl methacrylate and diallyl maleate.

Additional preferred rubbery copolymer impact modifiers are of the type disclosed in U.S. Pat. No. 4,292,233. These impact modifiers comprise, generally, a relatively high content of a butadiene polymer also having thereon acrylonitrile and styrene.

Preferred impact modifiers are methacrylate butadiene (MB) available from Rohm and Haas as Paraloid EXL2650A, methacrylate butadiene styrene (MBS), available from Rohm and Haas as e.g. Paraloid EXL2691 or 2600 and acrylonitrile butadiene Styrene (ABS) available from Crompton Chemicals as Blendex 338.

The block copolymer employed in combination with the rubbery copolymer is an A-B diblock and / or an A-B-A triblock copolymer. The A-B and A-B-A type block copolymer rubber additives, which can be used, are thermoplastic rubbers comprised of one or two alkenyl aromatic blocks, which are typically styrene blocks and a rubber block, e.g., a butadiene block, which may be partially or totally hydrogenated. Triblock copolymers and diblock copolymers having hydrogenated rubber blocks are especially preferred in the present compositions, for example Kraton G1650 and G1651, SEBS copolymer available from KRATON Polymers. These polymers can be modified by maleic anhydride, fumaric acid and other compatibility enhancing agents.

Suitable A-B and A-B-A type block copolymers are disclosed in, for example, U.S. Patent Nos. 3,078,254, 3,402,159, 3,297,793, 3,265,765, and 3,594,452 and U.K. Patent 1,264,741. Examples of typical species of A-B and A-B-A block copolymers include polystyrene-polybutadiene (SBR), polystyrene-poly(ethylene-propylene), polystyrene-polyisoprene, poly(a-methylstyrene)-polybutadiene, polystyrene-polybutadiene-polystyrene (SBR), polystyrene-poly(ethylene-butylene)-polystyrene (SEBS), polystyrene-polyisoprene-polystyrene and poly(a-methylstyrene)-polybutadiene-poly(a-methylstyrene), as well as the selectively hydrogenated versions thereof. Mixtures of various polymers including polystyrene-poly(ethylene-butylene)-polystyrene and polystyrene-poly(ethylene-propylene) copolymers can be utilized.

Such A-B and A-B-A block copolymers are available commercially from a number of sources, including Phillips Petroleum under the trademark SOLPRENE, KRATON Polymers under the trademark KRATON, Dexco under the tradename VECTOR, and Kuraray under the trademark SEPTON.

The quantity of the two impact modifiers is a total of about 3 to about 10 wt.% of the composition. Each one should be present at a minimum of at least about 0.25 wt % of the composition preferably about 0.3 or 0.4 wt %. In general the higher the amount of block copolymer the greater the tendency of the part to delaminate, particularly in a larger size part, such as one weighing 4 to 5 lbs. or more, or a geometrically intricate part. For such a large part or geometrically intricate part, a maximum of about 1.4 to 1.5 wt.% preferably about 1.3 wt.% of the block copolymer is employed. The total of the two impact modifiers is preferably below about 9 wt,%.

The matching of the polycarbonate, polyester, filler and the two impact modifiers brings about an injection molded part with an excellent balance of CTE, HDT, flow, good surface appearance, resistance to chemicals, and sound mechanical properties such as ductility, impact resistance, flexural modulus, and tensile measurements. As stated previously many of these desirable characteristics are in conflict with each other and are difficult to achieve in a single composition. However if a piece is to be exposed to the elements, or observed by individuals on a regular basis, or be painted, or any combination of these, then the aesthetics of the molded part become particularly significant. Generally the aesthetics are measured by various visual tests.
Among these are streak free, delamination free and blister free tests.

Streak performance is evaluated by using abusive molding whereby the plastic pellets are molded after being kept in the barrel of a molding machine at 270°C for 20 minutes. Streak itself is a fanlike surface defect or mark on a part near the injection mold gate or found where there is a sharp change of flow direction during the part molding process.

In order to maximize the probability of a streak free appearance in a molded part, there is present an anti streak effective quantity of at least one phosphorous containing polyester reaction quencher. A quencher is an additive, which prevents transesterification in a blend having a polycarbonate and a polyester. Examples of such a quencher include phosphorous acid, phosphoric acid, and the like. A preferred quencher is phosphorous acid. Generally, very small quantities of this additive are effective. A minimum of 0.005 wt.% of the composition, more desirably about 0.01 wt.% can be employed. Generally no more than about 0.1 wt.% need be used, although smaller quantities such as about 0.08 wt.% can also be employed.

In another aspect of the invention, an additional streak-reducing additive is also employed, preferably in combination with the phosphorous containing quencher. This is a phosphonite. A specific preferred phosphonite is P-EPQ, later defined. A minimum quantity of the phosphonite is about 0.1 to about 0.2 wt.%. Generally no more than about 1.0 wt.% of the phosphonite is employed. Delamination or peeling is detached, slate-like surface layers mostly occurring near the injection-molding gate.

"Blister" can occur after the molded part is painted and experiences a humid atmosphere. Tiny bubbles will be observed on the painted surface. In order to evaluate for blister, a painted part is immersed into water at 40°C for 240 hours and then observed.

Too much quencher residing in such blends can bring about blister phenomenon described above. We have found that a quenching additive effective at low-level less than about 0.1 wt.%, not only significantly prevents transesterification, but also can overcome essentially all of blisters. Phosphorous acid or phosphoric acid, or mixtures thereof are such examples. A minimum wt.% of such quencher is about 0.005 to 0.01 wt.%.

Also generally present in the blends of this invention are the typical primary and secondary anti-oxidants appearing in polycarbonate polyester blends. At least one primary anti-oxidant and at least one secondary antioxidant are present. The quantity of suitable primary antioxidant and secondary antioxidant employed, is that amount which brings about the desired stabilization characteristics. Usually the total quantity of antioxidants is less than 1.0 wt.% of the composition, preferably less than about 0.7 wt.%. The minimum for each of the antioxidant group is at least about 0.05 wt.%, preferable about 0.1-0.2 wt.%. Below is exemplification of various antioxidants.

The phenolic antioxidants useful in the instant compositions embrace a large family of compounds examples of which are given below.

Simple 2,6-dialkylphenol, such as, for example, 2,6-di-tert.-butyl-4-methylphenol, 2-tert.-butyl-4,6-di-methylphenol, 2,6-di-tert.-butyl-4-methoxymethylphenol 2,6-dioctadecyl-4-methylphenol and 2,6-di-tert-butylphenol. Vitamin E and derivatives of vitamin E are also useful phenolic antioxidants.

Derivatives of alkylated hydroquinones, such as for example, 2,5-di-tert.-butylhydroquinone, 2,5-di-tert.-amylhydroquinone, 2,6-di-tert.-butyl-hydroquinone, 2,5-di-tert.-butyl-4-hydroxy-anisole, 3,5-di-tert.-butyl4-hydroxy-anisole, tris-(3,5-di-tert.-butyl4-hydroxyphenyl) phosphite, 3,5-di-tert.-butyl4-hydroxyphenyl stearate and bis-(3,5-di-tert-butyl-4-hydroxyphenyl) adipate.

Hydroxylated thiodiphenyl ethers, such as, for example, 2,2'-thio-bis-(6-tert.-butyl-4-methylphenol), 2,2'-thio-bis-(4-octylphenol), 4,4'-thio-bis-(6-tert.-butyl-3-methylphenol), 4,4'-thio-bis-(3,6-di-sec.-amylphenol), 4,4'-thio-bis-(6-tert.-butyl-2-methylphenol) and 4,4'-bis-(2,6-dimethyl-4-hydroxyphenyl) disulfide.

Alkylidene-bisphenols, such as, for example, 2,2'-methylene-bis-(6-tert.-butyl-4-methylphenol), 2,2'-methylene-bis-(6-tert.-butyl-4-ethylphenol); 4,4'-methylene-bis-(6-tert.-butyl-2-methylphenol), 4,4'-methylene-bis-(2,6-di-tert.-butylphenol), 2,6-di(3,-tert.-butyl-5-methyl-2-hydroxybenzyl)-4-methylphenol, 2,2'-methylene-bis-[4-methyl-6-(alpha-methylcyclohexyl)-phenol], 1,1-bis(3,5-dimethyl-2-hydroxyphenyl)-butane, 1,1-bis-(5-tert.-butyl-4.-hydroxy-2-methylphenyl)-butane, 2,2-bis-(3,5-di-tert.-butyl4-hydroxyphenyl)-propane, 1,1,3-tris-(5-tert.-butyl-4-hydroxy-2-methylphenyl)-butane, 2,2-bis-(5-tert.-butyl-4-hydroxy-2-methylphenyl)-4-n-dodecylmercaptobutane, 1,1,5,5-tetra-(5-tert.-butyl-4-hydroxy-2-methylphenyl)-pentane and ethylene glycol bis-[3,3-bis-(3-tert.-butyl-4-hydroxyphenyl)-butyrate].

O-, N- and S-benzyl compounds, such as, for example, 3,5,3',5'-tetra-tert.-butyl-4,4'-dihydroxydibenzyl ether, octadecyl 4-hydroxy-3,5-dimethylbenzyl-mercaptoacetate, tris-(3,5-di-tert.-butyl-4-hydroxybenzyl)-amine and bis-(4-tert.-butyl-3-hydroxy-2,6-dimethylbenzyl) dithioterephthalate.

Hydroxybenzylated malonates, such as for example, dioctadecyl 2,2-bis-(3,5-di-tert.-butyl-2-hydroxybenzyl)-malonate, dioctadecyl 2-(3-tert.-butyl-4-hydroxy-5-methylbenzyl)-malonate, di-dodecylmercapto-ethyl, 2,2-bis-(3,5-di-tert.-butyl4-hydroxybenzyl)-malonate and di-[4-(1,1,3,3-tetramethylbutyl)-phenyl]2,2-bis-(3,5-di-tert.-butyl-4-hydroxybenzyl)-malonate.

Hydroxybenzyl-aromatic compounds, such as, for example, 1,3,5-tri-(3,5-di-tert.-butyl-4-hydroxybenzyl)-2,4,6-trimethylbenzene, 1,4-di-(3,5-di-tert-butyl-4-hydroxybenzyl)-2,3,5,6-tetramethylbenzene and 2,4,6-tri(3,5-di-tert.-butyl-4-hydroxybenzyl)-phenol.

S-Triazine compounds, such as, for example, 2,4-bisoctylmercapto-6-(3,5-di-tert.-butyl-hydroxl-anilino)-s-triazine, 2-octylmercapto,4,6-bis-(3,5-di-tert.-butyl-4-hydroxy anilino)-s-triazine, 2-octylmercapto-4,6-bis-(3,5-di-tert.-butyl-4-hydroxyphenoxy)-s-triazine, 2,4,6-tris-(3,5-di-tert.-butyl-4-hydroxyphenoxy)-s-triazine, 2,4,6-tris-(3,5-di-tert-butyl-4-hydroxyphenylethyl)-s-triazine, 1,3,5-tris-(2,6-di-methyl-3-hydroxy-4-tert-butylbenzyl)isocyanurate and 1,3-5-tris-(3,5-di-tert.-butyl-4-hydroxybenzyl)isocyanurate.

Amides of beta-(3,5-di-tert.-butyl-4-hydroxyphenyl)-propionic acid, such as, for example, 1,3,5-tris-(3,5-di-tert.-butyl-4-hydroxyphenyl-propionyl)-hexahydro-s-triazine and N,N'-di(3,5-di-tert.-butyl-4-hydroxyphenyl-propionyl)-hexamethylenediamine. N,N'-bis-beta-(3,5-di-t-butyl-4-hydroxyphenyl)-propionylhydrazine.

Esters of beta-(3,5-di-tert.-butyl-4-hydroxyphenyl)-propionic acid with monohydric or polyhydric alcohols, such as, for example with methanol, ethanol, octadecanol, 1,6-hexanediol, 1,9-nonanediol, ethylene glycol, 1,2-propanediol, diethylene glycol, thiodiethylene glycol, triethylene glycol, neopentylglycol, pentaerythritol, 3-thia-undecanol, 3-thia-pentadecanol, trimethylhexanediol, trimethylolethane, trimethylolpropane, tris-hydroxyethyl isocyanurate and 4-hydroxymethyl-1-phospha-2,6,7-trioxabicyclo-[2.2.2]octane.

Esters of beta-(5-tert.-butyl-4-hydroxyl-3-methylphenyl)-propionic acid with monohydric or polyhydric alcohols, such as, for example, with methanol, ethanol, octadecanol, 1,6-hexanediol, 1,9-nonanediol, ethylene glycol, 1,2-propanediol, diethylene glycol, triethylene glycol, thiodiethylene glycol, neopentylglycol, pentaerythritol, 3-thia-undecanol, 3-thia-pentadecanol, trimethylhexanediol, trimethylolethane, trimethylolpropane, - tris-hydroxyethyl- isocyanurate and 4-hydroxymethyl-1-phospha-2,6,7-trioxabicyclo[2.2.2]-octane.

Esters of 3,5-di-tert.-butyl-4-hydroxyphenylacetic acid with monohydric or polyhydric alcohols, such as for example, with methanol, ethanol, octadecanol, 1,6-hexandiol, 1,9-nonanediol, ethylene glycol, 1,2-propenediol, diethylene glycol, thiodiethylene glycol, neopentylglycol, pentaerythritol, 3-thia-undecanol, 3-thia-pentadecanol, trimethylhexanediol trimethylolethane, trimethylolpropane, tris-hydroxyethyl isocyanurate and 4-hydroxymethyl-1-phospha-2,6,7-trioxabicyclo[2.2.2]-octane, especially the tetrakis ester of pentaerythritol.

The phenolic antioxidant of particular interest is selected from the group consisting of n-octadecyl 3,5-di-tert-butyl-4-hydroxyhydrocinnamate, neopentanetetrayl tetrakis(3,5-di-tert-butyl-4-hydroxyhydrocinnamate), di-n-octadecyl 3,5-di-tert-butyl-4-hydroxybenzylphosphonate, 1,3,5-tris(3,5-di-tert-butyl-4-hydroxybenzyl)-isocyanurate, thiodiethylene bis(3,5-di-tert-butyl-4-hydroxyhydrocinnamate), 1,3,5-trimethyl-2,4,6-tris(3,5-di-tert-butyl-4-hydroxybenzyl)benzene, 3,6-dioxaoctamethylene bis(3-methyl-5-tert-butyl-4-hydroxyhydrocinnamate), 2,6-di-tert-butyl-p-cresol, 2,2'-ethylidene-bis(4,6-di-tert-butylphenol), 1,3,5-tris(2,6-dimethyl4-tert-butyl-3-hydroxybenzyl)isocyanurate, 1,1,3-tris(2-methyl-4-hydroxy-5-tert-butylphenyl)butane, 1,3,5-tris[2-(3,5-di-tert-butyl-4-hydroxyhydrocinnamoyloxy)ethyl]isocyanurate, 3,5-di-(3,5-di-tert-butyl-4-hydroxybenzyl)mesitol, hexamethylene bis(3,5-di-tert-butyl-4-hyroxyhydrocinnamate), 1-(3,5-di-tert-butyl4-hydroxyanilino)-3,5-di(octylthio)-s-triazine, N,N'-hexamethylene-bis(3,5-di-tert-butyl-4-hydroxyhydrocinnamamide), calcium bis(ethyl 3,5-di-tert-butyl-4-hydroxybenzylphosphonate), ethylene bis[3,3-di(3-tert-butyl-4-hydroxyphenyl)butyrate], octyl 3,5-di-tert-butyl-4-hydroxybenzylmercaptoacetate, bis(3,5-di-tert-butyl-4-hydroxyhydrocinnamoyl)hydrazide, and N,N'-bis-[2-(3,5-di-tert-butyl-4-hydroxyhydrocinnamoyloxy)ethyl]-oxamide.

A hindered amine stabilizer, can for example be 4-benzoyl-2,2,6,6-tetramethylpiperidine, 4-stearyloxy-2,2-6,6-tetramethylpiperidine, bis-(2,2,6,6-teframethylpiperidyl) sebacate, or 3-n-octyl-7,7,9,9-tetramethyl-1,3,-8-triazaspiro[4.5]decane-2,4-dione. Amine oxides of hindered amine stabilizers are also included in the present invention.

The most preferred primary anti-oxidant is the hindered phenol, for examples those utilized in the working examples as well as IRGANOX 1076, which is stearyl-3-(3',5-di-t-butyl-4-hydroxyplenyl) propionate (octadecyl-3,5-di-tentbutyl-4-hydrocinnamate).

Examples of secondary anti-oxidants, but not limited to, are phosphites, phosphonites, previously mentioned as a anti-streak material, and thio-compounds. Such thio-compounds may be for example dilauryl thiodipropionate, distearyl thiodipropionate or neopentanetetrayl tetrakis(3-dodecylthiopropionate). Distearyl thiodipropionate, dilauryl thiodipropionate, and pentaerythritol betalaurylthiopropionate is particularly preferred. Examples of phosphites and phosphonites are found in many U.S. patents and the scientific literature. Some of the materials are used in the invention examples.

Usually the total quantity of anti-oxidants is less than about 1.0 wt.% of the composition, preferably less than about 0.7 wt.%. The minimum for each of the antioxidant group is at least about 0.05 wt.%, preferable about 0.1-0.2 wt.%.

All the raw materials employed in the compositions below are blended together in a SMB1000 super mixer from Kawata Manufacture Co., Ltd from Japan. Care should be taken to insure proper mixing of liquids such as phosphorous acid into powders. The twin-screw extruder is 44 mm in diameter with barrel temperature set at 260°C, screw speed at 250 rpm, and throughput rate of 100 kg per hour. The extruded pellets are dried at 120°C for 5 hours prior to injection molding.

In addition to the blending and compounding systems mentioned above the following tests were employed to obtain the measured values.

Notched IZOD in kgf cm/cm - ASTM D256 with 3.2 mm thick IZOD bar
Tensile Strength at yield (T/S) in kgf/cm2 - ASTM D638 but with 10 mm/min stretching speed
Tensile Elongation at break (T/E) in percentage - ASTM D638 but with 10 mm/min stretching speed
Flexural Strength (F/S) in kgf/cm2 - ASTM D790 but with 2.5 mm/min deforming speed
Flexural Modulus (F/M) in kgf/cm2 - ASTM D790 but with 2.5 mm/min deforming speed
HDT in degree centigrade - ASTM D648 with 6.4 mm thick bar under 0.455 MPa load
MFI in gram/10minutes- ASTM D1238 under 2.16 kg load and 266 degree centigrade
CTE in mm/mm/°C - ASTM E831 in the range from -20 to 80 degrees centigrade

Ingredients used in the formulations are abbreviated as follows:
PC - Polycarbonate made by GE. CAS# 25971-63-5
PET - Polyethyleneterephthalate purchased from Mitsubishi Chemicals under the grade name MA-580. CAS# 25038-59-9
TALC - Talc in generic formula Mg(OH)₂Si₄O₁₀ purchased from IMIFABI S.p.A in Italy with the grade name HTPultra5. CAS# 14807-96-6
G1650 & G1651 - There are two types of SEBS supplied from KRATON Polymers. G1650 is low molecular weight version and G1651 is higher molecular weight version. CAS# 65997-17-3
EXL2650A - Methacrylate Butadiene available from Rohm Haas as commercial grade. CAS# 25053-09-2
AO168 Phosphite antioxidants Tris- (2,4-di-tert-butyl-pheny)-phosphite purchased from CIBA as IRGAFOS 168. CAS# 31570-04-4
P-EPQ - Antioxidant processing stabilizer (1,1'-Biphenyl)-4,4'-DiylBisphosphonous Acid Tetrakis (2,4-bis(1,1-dimethylethyl)phenyl) ester purchased from Clariant as Sandostab P-EPQ. CAS# 119345-01-6
AO1010 - Hindered phenol antioxidant Tetrakis(methylene(3,5-di-tert-butyl-4-hydroxyhydrocinnamate)methane purchased from CIBA as IRGANOX 1010. CAS# 6683-19-8
PELTP - Antioxidant Pentaerythritol tetrakis(3-laurylthiopropionate) is available from Crompton Specialties as Seenox 412S grade. CAS# 29598-76-3
H₃PO₃ - 50% aqueous solution of phosphorous acid purchased from Yoneyama Co., Ltd. CAS# 13598-36-2. Therefore the actual quantity of phosphorous acid used in the examples is one half the number shown in the examples.
SAPP - Sodium acid pyrophosphate Na₂H₂P₂O₇ purchased from Yoneyama Co., Ltd. CAS# 7758-16-9
PETS - Mold release agent Pentaerythrityl Tetrastearate purchased from Lonza Inc. CAS# 115-83-3.

### Experiment 1 Run Nos. 1-9

**Table I**

| Run No. | 1 | 2 | 3 | 4 | 5 | 6 | 7 | 8 | 9 |
|---|---|---|---|---|---|---|---|---|---|
| PC | 60.27 | 60.27 | 57.47 | 59.22 | 58.88 | 34.44 | 34.44 | 33.64 | 63.76 |
| PET | 25.83 | 25.83 | 24.63 | 25.38 | 25.66 | 51.66 | 51.66 | 50.46 | 27.33 |
| TALC | 8 | 8 | 12 | 12 | 8 | 8 | 8 | 10 | 8 |
| G1650 | 2.5 | | | 1.25 | | 5.0 | | 2.5 | |
| G1651 | | 2.5 | 2.5 | | | | 5.0 | | |
| EXL2650A | 2.5 | 2.5 | 2.5 | 1.25 | 5.0 | | | 2.5 | |
| SAPP | 0.3 | 0.1 | 0.1 | 0.3 | | 0.3 | 0.1 | 0.1 | 0.1 |
| H₃PO₃ | | | | | 0.02 | | | | |
| AO1010 | 0.1 | 0.2 | 0.2 | 0.2 | 0.1 | 0.2 | 0.1 | 0.2 | 0.1 |
| PELTP | 0.05 | 0.1 | 0.1 | 0.1 | 0.05 | 0.1 | 0.1 | 0.1 | 0.1 |
| PETS | 0.3 | 0.3 | 0.3 | 0.3 | 0.3 | 0.3 | 0.3 | 0.3 | 0.3 |
| AO168 | | | | | 0.1 | | | | |
| P-EPQ | | | | | 0.2 | | | | |
| Izod | 9.78 | 11.62 | 8.98 | 6.44 | 7.26 | 4.04 | 5.94 | 4.62 | 6.38 |
| T/S | 595 | 585 | 593 | 638 | 595 | 599 | 580 | 614 | 664 |
| T/E | 177 | 166 | 33 | 26 | 165 | 15 | 19 | 16 | 52 |
| F/S | 969 | 954 | 986 | 1069 | 970 | 1003 | 976 | 1043 | 1082 |
| F/M | 29230 | 28900 | 32970 | 35930 | 30800 | 32370 | 30830 | 34330 | 33070 |
| HDT | 136.0 | 135.5 | 135.8 | 136.0 | 132.5 | 134.7 | 135.7 | 137.1 | 133.4 |
| MFI | 21.4 | 19.9 | 18.6 | 21.4 | 23.7 | 37.9 | 40.1 | 30.6 | 28.6 |

Experiments were conducted to find effects of ingredient compositions on the mechanical properties such as impact, flow, tensile elongation and flexural modulus with respect to polycarbonate/polyester ratio, filler loading level and impact modifier type and amount.

Runs No.1 and No.2 are close to the desired values of mechanical properties. Comparison between Runs No.1 and No.2 shows that high molecular weight SEBS (G1651) has better impact performance over low molecular counterpart (G1650) but possesses lower flow. Difference between Runs No.2 and No.3 reveals the effect of 12 wt.% filler (talc) over 8 wt.%, which increases flexural modulus but reduce impact and tensile elongation performance. The pattern of halving the impact modifier (cf. Run No.1, No.3 and No.4) shows it is preferred to have at least 3 wt.% combined impact modifier to maintain a reasonable IZOD value (about 10 kgf cm/cm in this invention). Runs No.5 together with No.1 shows that with 5 wt.% sole EXL2650A impact performance is not satisfactory. As shown in comparative example set Runs No.6 through No.8, low ratio of PC to PET results in a loss of impact contribution. Runs No.6 through No.8 also compare the effect of three impact modifiers and identify the order of effectiveness as G1651 > combination of G1650 and EXL2650A > G1650, however they are all relatively low. Run No.9 shows a case when there is no impact modifier added but with highest PC to PET ratio. This example clearly shows a need to add impact modifier into the formulation in order to get sound impact performance.

### Experiment 2-1 Run Nos. 10-18

### Table II-A

| Run No. | 10 | 11 | 12 | 13 | 14 | 15 | 16 | 17 | 18 |
|---|---|---|---|---|---|---|---|---|---|
| PC | 60 | 60 | 60 | 60 | 60 | 60 | 60 | 60 | 60 |
| PET | 26 | 26 | 26 | 26 | 26 | 26 | 26 | 26 | 26 |
| TALC | 10 | 8 | 8 | 8 | 8 | 10 | 10 | 10 | 10 |
| G1650 | | 2.5 | 2.5 | 2.5 | 2.5 | | | | |
| G1651 | 5 | | | | | 3.7 | 3.7 | 3.7 | 3.7 |
| EXL2650A | | 2.5 | 2.5 | 2.5 | 2.5 | 1.2 | 1.2 | 1.2 | 1.2 |
| SAPP | 0.2 | 0.5 | 0.3 | 0.1 | 0.3 | 0.3 | 0.2 | 0.1 | 0.1 |
| AO1010 | 0.08 | 0.1 | 0.1 | 0.1 | 0.1 | 0.1 | 0.1 | 0.1 | 0.1 |
| PELTP | 0.05 | 0.05 | 0.05 | 0.05 | 0.05 | 0.05 | 0.05 | 0.05 | 0.05 |
| PETS | 0.3 | 0.3 | 0.3 | 0.3 | 0.3 | 0.3 | 0.3 | 0.3 | 0.3 |
| AO168 | | 0.05 | 0.05 | 0.05 | 0.05 | 0.05 | 0.05 | 0.05 | 0.05 |
| P-EPQ | | | | | 0.1 | | | | 0.1 |
| Streak | X | □ | ○ | X | □ | ○ | ○∼Δ | XX | □ |

Runs No.10 through No.18 were designed to identify and minimize streak on molded surface. Abusively molded parts, as previously defined, are visually inspected for streak. The ranking symbol of double circle □ means no streak. Single circle o means a very slight streak which is barely seen by casual look and which can be generally acceptable. Triangle □ is an about 10% streaked surface. Single X means about 15-25% of the molded surface has streak. Double XX means roughly 50% surface covered with steak. Triple XXX means about 75% or more of surface is streaked.

Runs No.l1 through No.13 clearly show increasing the quencher, SAPP, has a positive effect in minimizing streak. This observation was again observed in Runs No.15 through No.17. The contribution of P-EPQ, with respect to streak, is obvious. 0.1 wt.% P-EPQ with 0.3 wt.% SAPP (Run No.14) can reach the same effect of double circle as 0.5 wt.% SAPP alone (Run No.11). The effect of P-EPQ is also clear when the results of Run No.18 is compared to Run No.17.

### Experiment 2-2 Run Nos. 19-24

**Table II-B**

| Run No. | 19 | 20 | 21 | 22 | 23 | 24 |
|---|---|---|---|---|---|---|
| PC | 60.34 | 60.34 | 60.34 | 60.20 | 60.20 | 60.20 |
| PET | 25.84 | 25.84 | 25.84 | 25.83 | 25.83 | 25.83 |
| TALC | 8 | 8 | 8 | 8 | 8 | 8 |
| G1650 | 5 | | | 5 | | |
| G1651 | | 5 | | | 5 | |
| EXL2650A | | | 5 | | | 5 |
| SAPP | 0.2 | 0.2 | 0.2 | 0.2 | 0.2 | 0.2 |
| AO1010 | 0.1 | 0.1 | 0.1 | 0.1 | 0.1 | 0.1 |
| PELTP | 0.05 | 0.05 | 0.05 | 0.05 | 0.05 | 0.05 |
| PETS | 0.3 | 0.3 | 0.3 | 0.3 | 0.3 | 0.3 |
| AO168 | 0.05 | 0.05 | 0.05 | 0.1 | 0.1 | 0.1 |
| P-EPQ | 0.1 | 0.1 | 0.1 | 0.2 | 0.2 | 0.2 |
| Streak | XX | XX | XXX | X | XX | XXX |
| Izod | 8.54 | 11.22 | 7.80 | 9.38 | 11.14 | 8.10 |

Individual impact modifiers are evaluated with respect to streak performance with a low stabilizer level (0.05 wt.% AO168 and 0.1 wt.% P-EPQ) and a higher stabilizer level (0.1 wt.% AO168 and 0.2 wt.% P-EPQ). The differentiation is small but still reveals the trend. It seems that in both lowly stabilized Runs No.19 through No.21 and the highly stabilized Runs No.22 through No.24 the order of the impact modifier with respect to rendering severe streak is: EXL2650A > G1651 > G1650. The order of the impact modifier with respect to providing good impact performance is: G1651 > G1650 > EXL2650A.

Note that without a powerful quenching agent such as phosphorous acid, the streak performance is quite poor and can be highly variable, compared to the next table using phosphorous acid.

### Experiment 2-3 Run Nos. 25-30

**Table II-C**

| Run No. | 25 | 26 | 27 | 28 | 29 | 30 |
|---|---|---|---|---|---|---|
| PC | 60 | 60 | 60 | 60 | 60 | 60 |
| PET | 26 | 26 | 26 | 26 | 26 | 26 |
| TALC | 8 | 8 | 8 | 8 | 8 | 8 |
| G1651 | 1 | 1 | 1 | 1 | 1 | 1 |
| EXL2650A | 6 | 6 | 6 | 6 | 6 | 6 |
| H₃PO₃ | 0.03 | 0.03 | 0.03 | 0.03 | 0.03 | |
| AO1010 | 0.1 | | 0.1 | 0.1 | 0.1 | 0.1 |
| PELTP | 0.05 | 0.05 | | 0.05 | 0.05 | 0.05 |
| PETS | 0.3 | 0.3 | 0.3 | 0.3 | 0.3 | 0.3 |
| AO168 | 0.1 | 0.1 | 0.1 | | 0.1 | 0.1 |
| P-EPQ | 0.2 | 0.2 | 0.2 | 0.2 | | 0.2 |
| Streak | ○ | ○ | ○ | ○ | X | XXX |

Runs No.2-5 through No.30 clearly demonstrate the need of secondary heat stabilizer, P-EPQ and the quencher, phosphorous acid H₃PO₃ to reduce and/or even minimize the streak. In these Runs, the quencher has the main effect compared to P-EPQ.

### Experiment 3 Run Nos. 31-36

**Table III**

| Run No. | 31 | 32 | 33 | 34 | 35 | 36 |
|---|---|---|---|---|---|---|
| PC | 60 | 63.39 | 60.31 | 59.84 | 59.86 | 59.86 |
| PET | 26 | 20.63 | 25.84 | 25.65 | 25.66 | 25.66 |
| TALC | 10 | 10 | 8 | 8 | 8 | 8 |
| G1650 | | | 2.5 | 2.5 | 2.5 | 5 |
| G1651 | 5 | | | | | |
| EXL2650A | | 5 | 2.5 | 2.5 | 2.5 | |
| SAPP | 0.2 | | 0.2 | | | |
| H₃PO₃ | | 0.05 | | 0.05 | 0.02 | 0.02 |
| AO1010 | 0.08 | 0.08 | 0.1 | 0.1 | 0.1 | 0.1 |
| PELTP | 0.05 | 0.05 | 0.05 | 0.05 | 0.05 | 0.05 |
| PETS | 0.3 | 0.3 | 0.3 | 0.3 | 0.3 | 0.3 |
| AO168 | | | 0.05 | 0.1 | 0.1 | 0.1 |
| P-EPQ | | | 0.1 | 0.2 | 0.2 | 0.2 |
| Streak | X | X | ○ | ○ | ○∼Δ | ○ |
| Blister A | 5 | 4 | 5 | 4 | 2 | 2 |
| Blister B | 5 | 3 | 5 | 2 | 1 | 1 |

An issue of blister is surfaced during the course of development when the molded part is painted with urethane paints. The blister evaluation method is explained earlier. The ranking used to differentiate blister severity is from 5 to 1, with 5 the worst (almost 100% surface having blister) and 1 the least (only about 5% surface having blister) - similar to ISO 4628 or ASTM D714 photographic preference. Two brands of urethane paints are used in the study and identified as Blister A and Blister B.

Runs No.33 through No.35 clearly shows less quencher phosphorous acid (H₃PO₃) is favorable to blister elimination and the use of SAPP will cause the most serious blister problem. Runs No.31, No.32 and No.36 provide similar results, even when their respective impact modifier system is varied.

The catalyst quencher phosphorous acid (H₃PO₃) is more efficient than SAPP and can minimize blister while maintaining the same level of non-streak.

### Experiment 4 Run Nos. 37-43

**Table IV**

| Run No. | 37 | 38 | 39 | 40 | 41 | 42 | 43 |
|---|---|---|---|---|---|---|---|
| PC | 58.88 | 57.68 | 56.28 | 57.34 | 57.68 | 58.88 | 56.78 |
| PET | 25.66 | 25.36 | 24.76 | 25.2 | 25.36 | 25.66 | 24.76 |
| TALC | 8 | 8 | 8 | 8 | 8 | 8 | 8 |
| G1651 | 4 | 2 | 2 | 1.5 | 1 | | |
| EXL2650A | 1 | 4 | 6 | 5 | 5 | 5 | 8 |
| H₃PO₃ | 0.02 | 0.03 | 0.03 | 0.03 | 0.03 | 0.02 | 0.02 |
| AO1010 | 0.1 | 0.1 | 0.1 | 0.1 | 0.1 | 0.1 | 0.1 |
| PLETP | 0.05 | 0.05 | 0.05 | 0.05 | 0.05 | 0.05 | 0.05 |
| PETS | 0.3 | 0.3 | 0.3 | 0.3 | 0.3 | 0.3 | 0.3 |
| AO168 | 0.1 | 0.1 | 0.1 | 0.1 | 0.1 | 0.1 | 0.1 |
| P-EPQ | 0.2 | 0.2 | 0.2 | 0.2 | 0.2 | 0.2 | 0.2 |
| Streak | ○ | ○ | ○ | ○ | ○ | □X | X |
| Delamination | X | X | X | X | ○ | ○ | ○ |
| IZOD | 11.62 | 11.06 | 15.46 | 11.22 | 10.26 | 7.26 | 10.50 |

Delamination is due to incompatibility among the tertiary system of polycarbonate, polyester and impact modifier polymer. The delamination evaluation uses a fast injection speed (100 mm/s) to mold UL bars with a very thin molding tool (about 1 millimeter in thickness). The delamination performance is evaluated by visually checking the region close to the gate of the thin molded bars. A circle o identifies no delamination while cross X means delamination. It is found that certain level of SEBS can bring about delamination. Starting from 4 wt.% G1651, SEBS content is gradually decreased until the threshold is found, at about 1 wt.% (Run No.41). Therefore, the threshold loading of SEBS G1651 for delamination-free formulation of a large (4-5 lbs) or intricate part, in this invention is found to be below about 1.5 wt.% of the composition. The upper limit of SEBS calls for a rubber copolymer to be applied to maintain the required impact performance, which is about 10 kgf cm/cm. Since EXL2650A can cause streak, the countermeasure of relatively higher loading of H₃PO₃ (0.03 wt.% versus 0.02 wt.%) is used. Run No.42 shows 5 wt.% EXL2650A is too low to give sufficient impact performance. Run No.43 shows 8 wt.% EXL2650A can provide impact performance target but fails the streak test. Runs No.41 and No.42 emphasize the importance of the presence of two separate impact modifiers.

### Experiment 5 Run Nos. 44-49

**Table V**

| Run No. | 44 | 45 | 46 | 47 | 48 | 49 |
|---|---|---|---|---|---|---|
| PC | 57.69 | 56.64 | 56.99 | 57.34 | 56.29 | 56.64 |
| PET | 25.35 | 24.9 | 25.05 | 25.20 | 24.75 | 24.90 |
| TALC | 8 | 8 | 8 | 8 | 8 | 8 |
| G1651 | 1 | 1.5 | 1 | 0.5 | 1 | 0.5 |
| EXL2650A | 5 | 6 | 6 | 6 | 7 | 7 |
| H₃PO₃ | 0.03 | 0.03 | 0.03 | 0.03 | 0.03 | 0.03 |
| AO1010 | 0.1 | 0.1 | 0.1 | 0.1 | 0.1 | 0.1 |
| PELTP | 0.05 | 0.05 | 0.05 | 0.05 | 0.05 | 0.05 |
| PETS | 0.3 | 0.3 | 0.3 | 0.3 | 0.3 | 0.3 |
| AO168 | 0.1 | 0.1 | 0.1 | 0.1 | 0.1 | 0.1 |
| P-EPQ | 0.2 | 0.2 | 0.2 | 0.2 | 0.2 | 0.2 |
| Streak | ○ | ○ | ○ | ○ | ○ | ○ |
| Delamination | ○ | X | ○ | ○ | ○ | ○ |
| Izod | 9.78 | 12.10 | 12.10 | 11.06 | 13.62 | 11.46 |
| T/S | 569 | 551 | 558 | 566 | 549 | 556 |
| T/E | 149 | 160 | 153 | 182 | 188 | 198 |
| F/S | 916 | 895 | 909 | 922 | 882 | 894 |
| F/M | 30540 | 29680 | 30150 | 30580 | 29500 | 29960 |
| HDT | 133.8 | 133.3 | 133.5 | 133.4 | 133.2 | 133.0 |
| MFI | 23.0 | 20.7 | 21.0 | 21.8 | 20.2 | 19.7 |
| CTEx10⁻⁵ | | | 5.42 | 5.61 | | |

Runs No.44 through No.49 show a combination of variables to comprehensively overcome streak, blister and delamination and deliver good mechanical properties at the same time. Run No.45 with 1.5 wt.% SEBS shows delamination. All other samples provide the desired performance requirement set forth by automotive customers.

## Claims

1. A composition comprising
a. about 50 to about 80 wt.% aromatic polycarbonate,
b. about 15 to about 35 wt. % aromatic polyester,
c. about 5 to about 15 wt. % filler, and
d. about 3 to about 10 wt.% of a combination of a certain rubbery copolymer and a different block copolymer with at least about 0.25 wt. % rubbery polymer and at least about 0.25 wt.% block copolymer.

2. The composition in accordance with claim 1 wherein there is about 55 to about 75 wt.% polycarbonate.

3. The composition in accordance with claim 1 wherein there is about 18 to about 30 wt. % polyester.

4. The composition in accordance with claim 3 wherein the polyester is a polyethylene terephthalate.

5. The composition in accordance with claim 1 wherein the filler is mineral filler

6. The composition in accordance with claim 5 wherein the mineral filler is selected from the group consisting of talc, mica, wollastonite, or mixture thereof.

7. The composition in accordance with claim 1 wherein the block copolymer is poly (styrene-ethylene-butylene-styrene) and is from about 0.25 to less than about 1.5 wt.%.

8. The composition in accordance with claim 1 wherein there is present an anti-streak effective amount of a phosphorous containing polyester reaction quencher.

9. The composition in accordance with claim 8 wherein the quencher is selected from the group consisting of phosphorous acid, phosphoric acid, sodium acid pyrophosphate, and mixtures thereof.

10. The composition in accordance with claim 1 or claim 8 wherein there is present an anti-streak effective amount of a phosphonite.

11. The composition in accordance with claim 1 wherein there is present at least one primary antioxidant and/or at least one secondary antioxidant.

12. A shaped object molded from the composition of any preceding claim.

13. The composition in accordance with claim 1 comprising
a. about 55 to about 75 wt.% aromatic polycarbonate,
b. about 18 to about 30 wt.% aromatic polyester,
c. about 8 to about 12 wt. % filler, and
d. about 3 to about 9 wt. % of a combination of a rubbery copolymer and a block copolymer with at least about 0.25 wt.% rubbery polymer and at least about 0.25 wt.% block copolymer.

## Patentansprüche

1. Zusammensetzung, umfassend
a. etwa 50 bis etwa 80 Gew.-% aromatisches Polycarbonat,
b. etwa 15 bis etwa 35 Gew.-% aromatischen Polyester,
c. etwa 5 bis etwa 15 Gew.-% Füllstoff, und
d. etwa 3 bis etwa 10 Gew.-% einer Kombination aus einem bestimmten gummiartigen Copolymer und einem anderen Blockcopolymer mit wenigstens etwa 0,25 Gew.-% gummiartigem Polymer und wenigstens etwa 0,25 Gew.-% Blockcopolymer.

2. Zusammensetzung gemäß Anspruch 1, wobei etwa 55 bis etwa 75 Gew.-% Polycarbonat vorhanden sind.

3. Zusammensetzung gemäß Anspruch 1, wobei etwa 18 bis etwa 30 Gew.-% Polyester vorhanden sind.

4. Zusammensetzung gemäß Anspruch 3, wobei der Polyester ein Polyethylenterephthalat ist.

5. Zusammensetzung gemäß Anspruch 1, wobei der Füllstoff ein mineralischer Füllstoff ist.

6. Zusammensetzung gemäß Anspruch 5, wobei der mineralische Füllstoff ausgewählt ist aus der Gruppe bestehend aus Talk, Glimmer, Wollastonit oder einer Mischung davon.

7. Zusammensetzung gemäß Anspruch 1, wobei das Blockcopolymer Poly(styrol-ethylen-butylen-styrol) ist und von etwa 0,25 bis weniger als etwa 1,5 Gew.-% beträgt.

8. Zusammensetzung gemäß Anspruch 1, wobei eine Streifen bzw. Schlieren verhindernde wirksame Menge eines Phosphor enthaltenden Polyester-Reaktionslöschmittels bzw. -Reaktionsquenchers vorhanden ist.

9. Zusammensetzung gemäß Anspruch 8, wobei der Quencher ausgewählt ist aus der Gruppe bestehend aus phosphoriger Säure, Phosphorsäure, Dinatriumpyrophosphat und Mischungen davon.

10. Zusammensetzung gemäß Anspruch 1 oder Anspruch 8, wobei eine Streifen bzw. Schlieren verhindernde wirksame Menge eines Phosphonits vorhanden ist.

11. Zusammensetzung gemäß Anspruch 1, wobei wenigstens ein primäres Antioxidans und/oder wenigstens ein sekundäres Antioxidans vorhanden ist/sind.

12. Gestaltetes Objekt, geformt aus der Zusammensetzung eines vorhergehenden Anspruchs.

13. Zusammensetzung gemäß Anspruch 1, umfassend
a. etwa 55 bis etwa 75 Gew.-% aromatisches Polycarbonat,
b. etwa 18 bis etwa 30 Gew.-% aromatischen Polyester,
c. etwa 8 bis etwa 12 Gew.-% Füllstoff, und
d. etwa 3 bis etwa 9 Gew.-% einer Kombination aus einem gummiartigen Copolymer und einem Blockcopolymer mit wenigstens etwa 0,25 Gew.-% gummiartigem Polymer und wenigstens etwa 0,25 Gew.-% Blockcopolymer.

## Revendications

1. Composition comprenant :
a. environs 50 à environs 80 % en poids du polycarbonate aromatique,
b. environs 15 à environs 35 % en poids du polyester aromatique,
c. environs 5 à environs 15 % en poids de la charge, et
d. environs 3 à environs 10 % en poids d'une combinaison d'un certain copolymère gommeux et d'un copolymère bloc différent ayant au moins environs 0,25 % en poids du polymère gommeux et au moins environs 0,25 % en poids du copolymère bloc.

2. Composition selon la revendication 1, dans laquelle il y a environs 55 à environs 75 % en poids du polycarbonate.

3. Composition selon la revendication 1, dans laquelle il y a environs 18 à environs 30 % en poids du polyester.

4. Composition selon la revendication 3, dans laquelle le polyester est un polyéthylène téréphtalate.

5. Composition selon la revendication 1, dans laquelle la charge est une charge minérale.

6. Composition selon la revendication 5, dans laquelle la charge minérale est sélectionnée parmi le groupe consistant en le talc, le mica, le wollastonite ou des mélanges de ceux-ci.

7. Composition selon la revendication 1, dans laquelle le copolymère bloc est le poly(styrène-éthylène-butylène-styrène) et est environs de 0,25 % en poids à moins d'environs 1,5 % en poids.

8. Composition selon la revendication 1, dans laquelle une quantité effective anti-strie d'un étouffeur de réaction polyester contenant du phosphore est présente.

9. Composition selon la revendication 8, dans laquelle l'étouffeur est sélectionné parmi le groupe consistant en l'acide phosphorique, l'acide phosphoreux, le pyrophosphate acide de sodium, et des mélanges de ceux-ci.

10. Composition selon la revendication 1 ou la revendication 8, dans laquelle une quantité effective anti-strie d'un phosphonite est présente.

11. Composition selon la revendication 1, dans laquelle au moins un antioxydant primaire et/ou un antioxydant secondaire est présent.

12. Produit formé par moulage à partir d'une composition selon l'une des revendications précédentes.

13. Composition selon la revendication 1 comprenant
a. environs 55 à environs 75 % en poids du polycarbonate aromatique,
b. environs 18 à environs 30 % en poids du polyester aromatique,
c. environs 8 à environs 12 % en poids de la charge, et
d. environs 3 à environs 9 % en poids d'une combinaison d'un copolymère gommeux et d'un copolymère bloc ayant au moins environs 0,25 % en poids du polymère gommeux et au moins environs 0,25 % en poids du copolymère bloc.
